# EUROPÄISCHE PATENTSCHRIFT

(11) **EP 0 582 048 B1**
(45) Veröffentlichungstag und Bekanntmachung des Hinweises auf die Patenterteilung: **27.12.1995**
(21) Anmeldenummer: 93108073.3
(22) Anmeldetag: 18.05.1993
(51) Int. Cl.: E05C 9/00, E05B 63/00

(54) **Abstützvorrichtung zwischen dem Getriebegehäuse eines Einsteck-Kantengetriebes und einer damit über Ankerschrauben verbindbaren Lagerrosette eines Bedienungshebels**
Attachment device between the driving box of an espagnolette mechanism and the corresponding, connectable escutcheon for a handle with anchor bolt
Dispositif de fixation entre le boîtier de manoeuvre d'une crémone et la correspondante plaque pour poignée avec vis d'ancrage

(30) Priorität: 06.08.1992 DE 4225971
(43) Veröffentlichungstag der Anmeldung: 09.02.1994
(73) Patentinhaber: SIEGENIA-FRANK KG, 57005 Siegen (DE)
(72) Erfinder: Laufenburg, Willi, W-5901 Wilnsdorf 2 (DE)

(56) Entgegenhaltungen:
- EP-A- 0 414 162
- DE-A- 2 343 933
- DE-U- 9 112 424
- US-A- 2 940 784

## Beschreibung

Gegenstand der Erfindung ist eine Abstützvorrichtung zwischen dem Getriebegehäuse eines Einsteck-Kantengetriebes für die Flügel von Fenstern, Türen od. dgl. und einer damit über Ankerschrauben verbindbaren Lagerrosette eines mit einem Profildorn in die Nuß des im Getriebegehäuse lagernden Antriebgliedes eingreifenden Bedienungshebels. Sie betrifft dabei eine Anordnung, bei der das Getriebegehäuse von einer falzseitig offenen Ausnehmung des Flügelprofils aufgenommen ist, die Lagerrosette auf der raumseitigen Stirnfläche des Flügelprofils sitzt und die Ankerschrauben durch von der raumseitigen Stirnfläche ausgehende, rechtwinklig dazu gerichtete Löcher in Gewindebohrungen des in der Ausnehmung liegenden Getriebegehäuses übergreifen. Bei der Verwendung der vorbeschriebenen Anordnung eines, z.B. für Drehkippbeschläge benutzten Einsteck-Kantengetriebes und des zugehörigen Bedienungshebels mit Lagerrosette an Flügeln für Fenstern, Türen od. dgl., die aus Metall oder Kunststoffhohlprofilen gefertigt sind, liegt derjenige Teil des Getriebegehäuses, welcher die Gewindebohrungen für den Eingriff der Ankerschrauben aufweist, in einem Profilhohlraum, so daß das Getriebegehäuse in diesem Bereich mit seinen Seitenflächen am Hohlprofil nicht abgestützt werden kann. Dies hat in der Praxis zur Folge, daß durch ein zu kräftiges Anziehen der Ankerschrauben des Bedienungshebels das Getriebegehäuse innerhalb des Hohlprofils schiefgezogen wird, womit die Leichtgängigkeit des Einsteck-Kantengetriebes stark beeinträchtigt wird. Auch bei in Massivprofile, z.B. aus Holz, eingearbeiteten, nämlich eingefrästen und/oder eingebohrten, Ausnehmungen aufgenommenem Getriebegehäuse, kann dessen Schiefziehen die gleichen nachteiligen Folgen haben.

Zur Vermeidung eines solchen Schiefziehens des Getriebegehäuses ist schon vorgeschlagen, zwischen das Getriebegehäuse und die Unterseite der Lagerrosette jeweils koaxial zu den Ankerschrauben Distanzhalter in Form von Hülsen einzusetzen, die beim Anziehen der Ankerschrauben eine kraftschlüssige Stützverbindung zwischen der Lagerrosette und dem Getriebegehäuse herbeiführen.

Aus der DE-U- 71 08 093 ist zu diesem Zweck ein hülsenförmiger Abstandshalter bekannt, der zwei längs verlaufende keilförmige Einschnitte aufweist, mittels der er in die Durchgangsbohrungen des Flügelprofils eingeschnappt werden kann.

Da die zur Herstellung der Fenster- oder Türflügel verwendeten Profile, aus Metall, Kunststoff oder Holz aber oft unterschiedliche Querschnittsformen haben und dabei hauptsächlich die Dicke der Flügelüberschläge sehr unterschiedlich ist, ergeben sich auch beträchtlich verschiedene Einbauabstände zwischen der Lagerrosette und dem Getriebegehäuse.

In der DE-A- 2 343 933 wird daher ein Distanzhalter vorgeschlagen, dessen Länge sich mittels Stellgliedern auf verschiedene Abstände zwischen der Lagerrosette und dem Getriebegehäuse einstellen läßt.

Nachteil beider Vorschläge ist, daß bei Montage des Bedienungsgriffes zusätzliche Arbeiten notwendig sind. So ist bei der in der DE-A- 2 343 933 vorgeschlagenen Lösung das manuelle Messen und Voreinstellen des Distanzhalters auf die unterschiedlichen Dicken der Flügelüberschläge notwendig. Bei dem in der DE-U- 71 08 093 vorgeschlagenen Vorgehen müssen die für die unterschiedlichen Dicken der Flügelüberschläge notwendigen, verschieden langen Hülsen auf Lager gehalten werden. Bei der Vielzahl von unterschiedlichen Überschlagdicken (z.B. zwischen 14 und 22 Millimetern) bedeutet das einen enormen Lager- und auch Herstellungsaufwand.

Ziel der Erfindung ist es nun, das nachteilige Schiefziehen der Getriebegehäuse gegenüber den Lagerrosetten zu vermeiden, ohne daß für die unterschiedlichen Einbaufälle verschiedene Distanzhülsen notwendig sind oder Zusammenbau- und Einstellarbeiten vorgenommen werden müssen.

Die Lösung des Problems wird ausgehend von dem Oberbegriff des Anspruchs 1 erfindungsgemäß auf einfache Art und Weise durch dessen Kennzeichnungsmerkmale erreicht. Verschiedene Weiterbildungen der Distanzhalter sind durch Merkmale der Ansprüche 2 bis 9 gekennzeichnet.

Erfindungsgemäße Abstützvorrichtungen haben den Vorteil, daß sie ohne Durchführung irgendwelcher Zusatzmanipulationen, allein durch die übliche Handhabung der Ankerschrauben zur Überbrückung verschiedener Stützabstände zwischen dem Getriebegehäuse eines Einsteck-Kantengetriebes und der Lagerrosette eines zugehörigen Bedienungshebels benutzt werden können.

In der Zeichnung ist der Gegenstand der Erfindung in mehreren verschiedenen Ausführungsbeispielen dargestellt. Es zeigt
- Fig. 1: einen Querschnitt durch das Profil eines mit einem Einsteck-Kantengetriebe und einem Bedienungshebel mit Lagerrosette ausgestatteten Fensterflügels im Durchgangsbereich einer Ankerschraube,
- Fig. 2: in vergrößertem Maßstab einen Schnitt durch die Befestigungsrosette mit Durchgangsloch für die Ankerschraube und zugeordneter Distanzhülse in ihrer Grund- bzw. Ausgangsposition,
- Fig. 3: in ebenfalls vergrößertem Maßstab einen Ausschnitt der Rosette von unten mit einem Rohrabschnitt,
- Fig. 4: in vergrößertem Maßstab die Hülse und einen den Rohransatz enthaltenden Abschnitt der Rosette in einem Querschnitt.

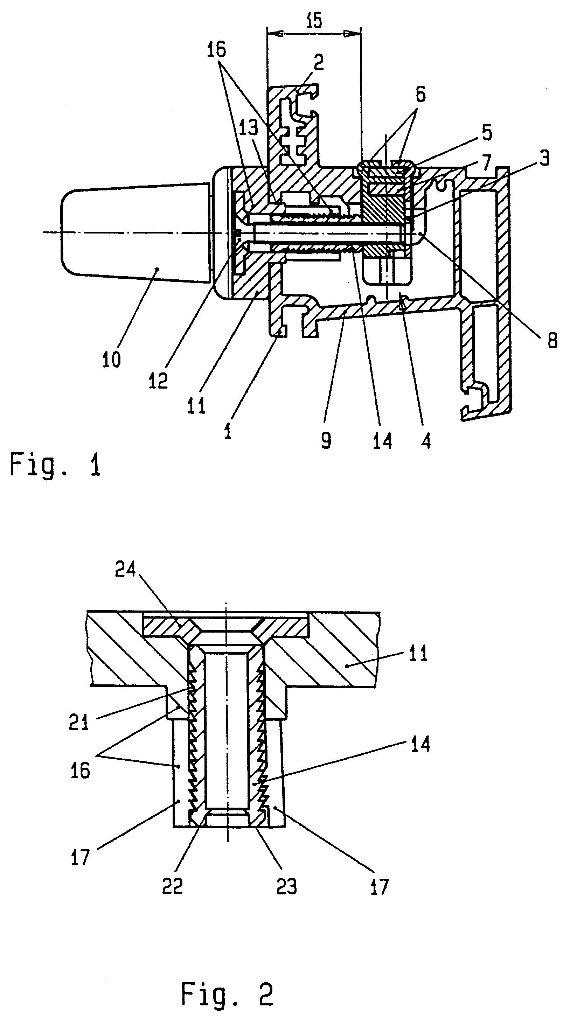

In Fig. 1 der Zeichnung ist als Anwendungsbeispiel das Flügelprofil 1 eines Kunststoffensters gezeigt, das einen Überschlag 2 aufweist, hinter dem in die Falzfläche eine Profilnut 3 eingeformt ist. In die Profilnut 3 ist ein Treibstangenbeschlag mit einem Einsteck-Kantengetriebe 4 eingesetzt. Dieses Einsteck-Kantengetriebe 4 besteht aus einer Stulpschiene 5, einem an deren Rückseite in einem Getriebegehäuse 6 angeordneten Betätigungsgetriebe, z.B. mit Ritzel und Zahnstange, und einer von diesem bewegten Treibstange 7.

Beim Einbau eines solchen Einsteck-Kantengetriebes 4 in das Flügelprofil 1 werden die Stulpschiene 5 und die Treibstange 7 auf ihrer ganzen Länge von der Profilnut 3 aufgenommen. Das Getriebegehäuse 6 liegt jedoch nur mit seinem die Treibstange 7 führenden Teilbereich innerhalb dieser Profilnut 3, während es mit seinem übrigen Bereich durch eine in den Grund der Profilnut 3 eingefräste Aussparung 8 in den Hohlraum 9 des Flügelprofils 1 hineinragt.

Zur Bedienung des im Getriebegehäuse 6 angeordneten Betätigungsetriebes dient in bekannter Weise ein Bedienungshebel 10, der drehbar in einer Lagerrosette 11 sitzt und mit einem (nicht gezeigten) Dorn in die Nuß des drehbeweglich darin gelagerten Antriebsgliedes, z.B. des Ritzels eingreift.

Der Bedienungshebel 10 sitzt mit seiner Lagerrosette 11 auf der raumseitigen Stirnfläche des Flügelprofils 1, wobei die Lagerrosette 11 durch zwei als Befestigungsmittel benutzte Ankerschrauben 12 - von denen in Fig. 1 nur eine gezeigt ist - mit dem Getriebegehäuse 6 des Einsteckkantengetriebes 4 verbunden wird.

Um diese Verbindung zu ermöglichen, werden drei Bohrungen 13 achsparallel zueinander und rechtwinklig zur raumseitigen Stirnfläche des Flügelprofils 1 in dieses eingebracht. Durch die äußeren Bohrungen 13 greifen dabei die Ankerschauben 12 für die Lagerrosette 11 in das Getriebegehäuse 6 bzw. darin befindliche Innengewinde ein, während die mittlere Bohrung von dem in das Betätigungsgetriebe eingreifenden Dorn des Bedienungshebels 10 durchsetzt wird.

Da das Getriebegehäuse 6 des Einsteck-Kantengetriebes 4 in denjenigen Bereichen, in welchen die Ankerschrauben 12 für die Lagerrosette 11 angreifen, außerhalb der Profilnut 3, z. B. im Hohlraum 9 des Flügelprofils 1 liegt, besteht die Gefahr, daß es durch zu starkes Anziehen der Ankerschrauben 12 aus seiner Ideallage nach der raumseitigen Flügelstirnfläche hin schiefgezogen wird. Ein solches Schiefziehen des Getriebegehäuses 6 kann ein Auseinanderziehen des zweiteilig ausgebildeten Getriebegehäuses 6 bewirken und dadurch begründet zu einem Verkanten des - nicht gezeigten - auf dem Dorn des Bedienungshebels 10 sitzenden Zahnritzels in den Lagerstellen des Getriebegehäuses 6 führen. Hieraus resultieren dann erhöhter Verschleiß und Schwergängigkeit.

Zur Vermeidung dieses Nachteils ist den von den Ankerschrauben 12 durchsetzten Bereichen der Lagerrosette 11 koaxial zu den Bohrungen 13 des Flügelprofils 1 jeweils eine Distanzhülse 14 als Abstützvorrichtung zugeordnet. Jede Distanzhülse 14 stützt sich andererseits gegen die Stirnfläche des Getriebegehäuses 6 ab, wie das die Fig. 1 deutlich zeigt. Dabei sind die Distanzhülsen 14 axial verschiebbar, sowie zumindest feinstufig gegen die Lagerrosette 11 verstellbar vorgesehen.

Bedingt durch den Umstand, daß eine Vielzahl von Flügelprofilen 1 marktgängig sind ist, bei denen das Abstandsmaß 15 der Profilnut 3 von der die Lagerrosette 11 tragenden Profilstirnfläche völlig verschieden ausfällt, ist es wichtig, die Distanzhülsen 14 der Abstützvorrichtung derart auszubilden, daß mit ihrer Hilfe in jedem Fall dem Schiefziehen des Getriebegehäuses 6 durch die Ankerschrauben 12 der Lagerrosette 11 begegnet werden kann.

Fig. 2 der Zeichnung zeigt in größerem Maßstab lediglich ein Teilstück der Lagerrosette 11 für den Bedienungshebel 10. Dabei kann die Lagerrosette 11 als Formteil aus Metall oder Kunststoff hergestellt werden. Sie ist im Durchgangsbereich jeder Ankerschraube 12 rückseitig mit einem angeformten Rohransatz 16 versehen. Dieser Rohransatz 16 ist mit mehreren, z.B. vier im Winkel von 90° zueinander liegenden, radial verlaufenden Schlitzen 17 versehen, die sich nur über eine Teillänge des Rohransatzes 16 erstrecken. Jeder Rohransatz 16 bildet über die Länge der Schlitze 17 hinweg eine entsprechende Anzahl, also beispielsweise vier, Federsegmente 18 aus, die an ihrem Innenumfang Rastverzahnungen 19 aufweisen, welche vorzugsweise mit einem Sägezahnprofil versehen sind, das eine abwärts gerichtete bzw. dem freien Ende des Rohransatzes 16 zugewendete, steile Flanke 19a und eine im wesentlichen aufwärts weisende, flache Flanke 19b aufweist. Dadurch erhalten die einzelnen Zähne der Rastverzahnungen 19 eine Profiltiefe 19c, die nur einem Bruchteil der Profilhöhe 19d entspricht.

Wesentlich ist auch, daß der mit den Schlitzen 17 versehene Längenabschnitt 16a der Rohransätze 16 einen Durchmesser 16c aufweist, welcher geringer ist, als der Durchmesser 16d des ungeschlitzten Längenabschnittes 16b desselben. Die Differenz der beiden Durchmesser 16c und 16d sollte dabei mindestens der doppelten Profiltiefe 19c der Rastverzahnungen 19 entsprechen.

Die Rastverzahnungen 19 am Innenumfang der Rohransätze 16 brauchen sich nur über eine gewisse Teillänge der durch die Schlitze 17 gebildeten Federsegmente 18 hinweg zu erstrecken, beispielsweise dergestalt, daß jede Rastverzahnung 19 vier oder fünf Sägezahnprofile umfaßt. Zweckmäßigerweise sind dabei die Rastverzahnungen 19 zumindest im Anschluß an die freien Enden der Federsegmente 18 vorgesehen.

Bewährt hat es sich, die Rastverzahnungen 19 so in den Innenumfang der Rohransätze 16 einzuformen, daß die steile Flanke 19a jedes Sägezahnprofils auf einer zur Längsachse des betreffenden Rohransatzes 16 normal ausgerichteten Ebene liegt. Im einfachste Falle haben die Rastverzahnungen 19 an allen Federsegmenten 18 übereinstimmende Höhenlage, d.h. die steilen Flanken 19a der einzelnen Sägezahnprofile befinden sich an allen Federsegmenten 18 auf gleicher Höhe. In vielen Fällen wirkt es sich jedoch vorteilhaft aus, wenn die Rastverzahnungen 19 an in Umfangsrichtung aufeinanderfolgenden Federsegmenten 18 der Rohransätze 16 um einen halben Teilungsabstand bzw. eine halbe Profilhöhe 19d gegeneinander längsversetzt sind. Sie haben also jeweils nur an zwei sich diametral gegenüberliegenden Federsegmenten 18 mit ihren steilen Flanken 19a gleiche Höhenlage, während sie an den beiden anderen, sich ebenfalls jeweils diametral gegenüberliegenden Federsegmenten 18 um die Hälfte einer Profilhöhe 19d höhenversetzt liegen.

Denkbar ist es schließlich aber auch, die Rastverzahnungen 19 am Innenumfang der Rohransätze 16 bzw. der Federsegmente 18 gewindeartig, also mit Steigung, einzuformen.

Die axial verschiebbar in jedem Rohransatz 16 aufgenommene Distanzhülse 14 ist an ihrem Außenumfang mit zu den Rastverzahnungen 19 komplementären, widerhakenartig wirkenden, Gegenrastverzahnungen 21 versehen, wobei auch hier vorzugsweise ein Sägezahnprofil verwendet wird. Dabei sind die steilen Flanken 21a jedes Zahnprofils nach oben gewendet, während die flach geneigten Flanken 21b desselben im wesentlichen nach abwärts weisen.

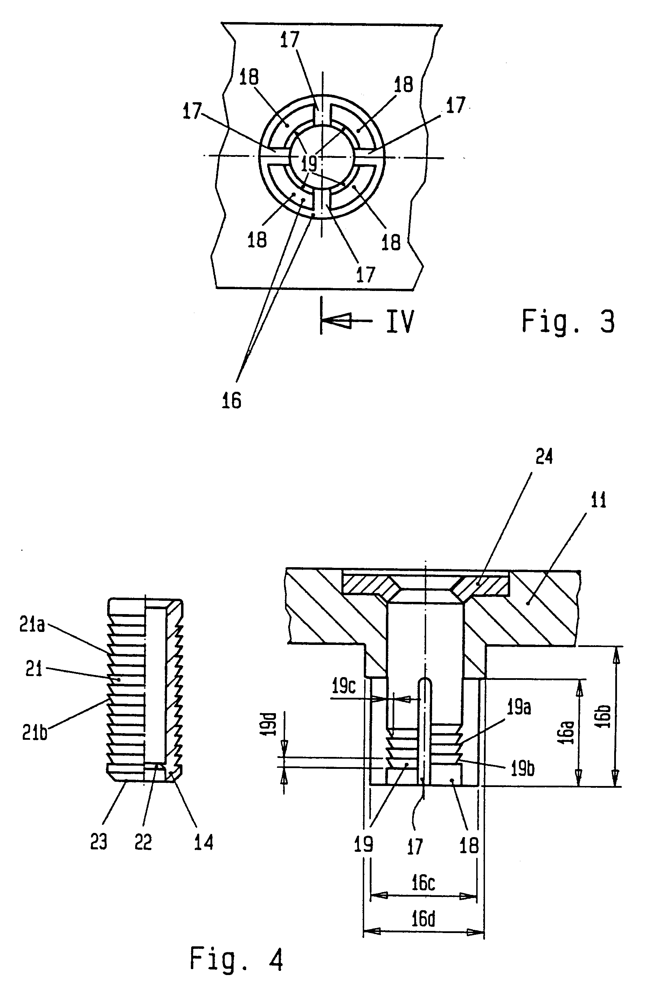

Im einfachsten Falle erstrecken sich hier die einzelnen Zahnprofile der Gegenrastverzahnung 21 ununterbrochen über den gesamten Umfang der Distanzhülse 14 hinweg, wie das im linken Teil der Fig. 4 zu sehen ist.

Nahe ihrem unteren, der Lagerrosette 11 abgewendeten Ende ist am Innenumfang jeder Distanzhülse 14 ein Mitnehmerkranz 22 ausgeformt, der
ebenfalls ein Sägezahnprofil aufweisen kann. Bei der Montage des Bedienungshandhebels 10 am Flügelprofil 1 werden die Ankerschrauben 12 in die Distanzhülse 14 eingetaucht und kommen dadurch an ihrem Schaftende mit
dem Mitnehmerkranz 22 in Eingriff. Die durch die Rastwirkung der Federelemente 18 über die Rastverzahnungen 19 und die Gegenrastverzahnungen 21 bewirkte axiale Lagenfixierung der Distanzhülsen 14 wird dann durch genügend starken axialen Druck auf die Ankerschrauben 12 überwunden, indem die Federsegmente 18 unter der Einwirkung der aufeinandergleitenden flach geneigten Flanken 19b und 21b elastisch aufgeweitet werden. Dadurch stellt sich eine Längsverschiebung der Distanzhülsen 14 in den Rohransätzen 16 aus der Stellung nach Fig. 2 in die Stellung nach Fig. 1 ein, bis das freie Ende der Distanzhülsen 14 mit seiner Anlagefläche 23 gegen die Stirnfläche des Getriebegehäuses 6 trifft. Da die Federsegmente 18 der Rohransätze 16 bestrebt sind, radial nach einwärts in ihre Ausgangslage zurückzukehren, kommen die Rastverzahnungen 19 der Rohransätze 16 und die Gegenrastverzahnungen 21 der Distanzhülsen 14 über ihre steilen Flanken 19a und 21a miteinander in Stützeingriff und fixieren dadurch die Lagerrosette 11 und das Getriebegehäuse 6 über das Abstandsmaß 15 selbsttätig und starr gegeneinander, wenn die Ankerschrauben nach Eindringen in die Innengewinde am Getriebegehäuse 6 fest angezogen werden.

Die in der rechten Hälfte der Fig. 4 wiedergegebene axiale Versetztlage der Gegenrastverzahnungen 21 an in Umfangsrichtung benachbarten Federsegmenten 18 jedes Rohransatzes 16 macht es, bei relativ kräftiger Bemessung der einzelnen Zahnprofile möglich eine feinstufige Lagenanpassung der axial verschiebbaren Distanzhülsen 14 zu erhalten, um das Abstandsmaß 15 zu erreichen.

Eine praktisch stufenlose Axialverlagerung der Distanzhülsen 14 relativ zu den Rohransätzen 16 ist dann möglich, wenn die Rastverzahnungen 19 und die Gegenrastverzahnungen 21 als Sägezahngewinde ausgelegt werden und darüberhinaus der Mitnehmerkranz 22 in den Distanzhülsen 14 so auf den Kernquerschnitt der Ankerschrauben 12 abgestimmt wird, daß in begrenztem Maße auch eine Drehkraftübertragung auf die Distanzhülsen 14 erfolgen kann. Andererseits sollte jedoch sichergestellt werden, daß sich die Distanzhülsen 14 nicht unter allen Umständen durch den Kraftangriff der Ankerschrauben 12 an den Mitnehmerkränzen 22 mitdrehen. In den meisten Fällen reicht es aus, durch das Auftreffen der unteren Anlagefläche 23 der Distanzhülsen 14 auf die Stirnfläche des Getriebegehäuses 6, ein Mitdrehen der Distanzhülsen 14 mit den Ankerschrauben 12 zu unterbinden. Die Ankerschrauben 12 überwinden den Mitnehmerkranz 22 innerhalb der Distanzhülse 14 und dringen dann in die Innengewinde am Getriebegehäuse 6 ein.

Ein Mitdrehen der Distanzhülsen 14 mit den Ankerschrauben 12 nach dem Auftreffen ihrer Anlagefläche 23 auf die Stirnfläche des Getriebegehäuses 6 kann auch noch auf anderem Wege verhindert werden. Sowohl die Anlagefläche 23 als auch die Stirnfläche des Getriebegehäuses 6 in der Umgebung der Innengewinde können nämlich mit Noppen oder Vorsprüngen, z.B. radialen Rillen, Riffeln, Zähnen od. dgl., versehen werden, die dann miteinander in Sperreingriff treten.

Die sich selbsttätig an das Abstandsmaß 15 anpassende Axialverschiebung der Distanzhülsen 14 in den Rohransätzen 16 der Lagerrosette 11 wird einzig und allein durch das übliche Anschlagen des Bedienungshebels 10 am Flügelprofil 1 mit Hilfe der Ankerschrauben 12 bewirkt, wobei die steilen Flanken 19a und 21a der Rohransätze 16 und der Distanzhülsen 14 eine Rückverlagerung der Distanzhülsen 14 in Richtung zum Bedienungshebel 10 sicher verhindern.

Bei der in der rechten Hälfte der Fig. 4 gezeigten Ausgestaltung der Rastverzahnungen 19 ist deren um die halbe Zahnteilung längsversetzte Anordnung an einander benachbarten Federsegmenten 18 von besonderem Vorteil. Es ist dadurch nämlich sichergestellt, daß die Rastung der Distanzhülsen 14 in den Rohransätzen 16 um jeweils die Hälfte der Zahnhöhe 19d stattfinden kann.

Es ist möglich, die Distanzhülsen 14 an ihrem Innenumfang anstelle des Mitnehmerkranzes 22 auch mit mehreren Längsrippen zu versehen, die einen etwa dreieckigen Querschnitt besitzen und dabei in Umfangsrichtung gleichmäßig verteilt angeordnet sind. Die Profilhöhe diese Längsrippen sollte dabei an die Gewindetiefe der Ankerschrauben 12 so angepaßt sein, daß das Entstehen eines übermäßigen Reibschlusses verhindert wird, der ein ständiges Mitdrehen mit der durchgeführten Ankerschraube herbeiführen würde.

Auch hat sich bewährt, mindestens im Bereich jedes Rohransatzes 16 an der diesem abgewendeten Stirnfläche der Rosette 11 zur Verstärkung ein metallisches Widerlager einzubetten, das mit einem Senkloch zur Aufnahme der Köpfe der Ankerschrauben 12 versehen ist. Das Zusammenwirken der Lagerrosette 11 mit dem Getriebegehäuse 6 über die aus der Distanzhülse 14 und dem Rohransatz 16 bestehenden Abstützvorrichtung wird hierdurch optimiert.

Es sei hier abschließend noch erwähnt, daß auch die Möglichkeit besteht, die Distanzhülsen 14 an ihrem oberen Ende mit einer radialen Nase auszustatten, die beim Einschieben in den Rohransatz 16 mit einem in diesen eingeformten, längsverlaufenden Radialkanal in Formschlußeingriff tritt. Dieser Radialkanal kann dabei in Verlängerung eines der Schlitze 17 liegen, so daß eine Verdrehsicherung der Distanzhülse 14 über ihre insgesamt mögliche Verstellänge erreichbar ist.

Endlich ist noch darauf hinzuweisen, daß eine Abstützvorrichtung der vorstehend im einzelnen erläuterten Art nicht auf die Anwendung bei Flügelprofilen 1 beschränkt ist, die als Hohlprofile aus Metall oder Kunststoff gestaltet sind. Vielmehr kann sie auch bei massiv ausgeführten Flügelprofilen 1, insbesondere bei solchen aus Holz, zur Anwendung gelangen, bei denen das Getriebegehäuse 6 nicht von einer Hohlkammer 9 aufgenommen wird, sondern vielmehr von einer durch Fräsen oder Bohren gebildeten Ausnehmung. Die vorteilhafte Wirkung der Abstützvorrichtung ist jedoch hier die gleiche wie beim Einsatz in Verbindung mit Hohlkammer-Flügelprofilen aus Metall oder Kunststoff.

## Patentansprüche

1. Abstützvorrichtung zwischen dem Getriebegehäuse (6) eines Einsteck-Kanten-getriebes (4) für die Flügel von Fenstern, Türen od. dgl. und einer damit über Ankerschrauben (12) verbindbaren Lagerrosette (11) eines mit einem Profildorn in die Nuß des im Getriebegehäuse (6) lagernden Antriebsgliedes eingreifenden Bedienungshebels (10), wobei das Getriebegehäuse (6) von einer falzseitig offenen Ausnehmung des Flügelprofils (1) aufgenommen ist, die Lagerrosette (11) auf der raumseitigen Stirnfläche des Flügelprofils (1) sitzt und die Ankerschrauben (12) durch von der raumseitigen Stirnfläche ausgehende, rechtwinklig dazu gerichtete Löcher (13) in Gewindebohrungen des in der Ausnehmung liegenden Getriebegehäuses (6) übergreifen, wobei die Löcher (13) im Flügelprofil (1) von koaxial zu den Ankerschrauben (12) liegenden Hülsen (14) durchsetzt sind und wobei diese Hülsen (14) Stellglieder (21) aufweisen über die sie in ihrer wirksamen Länge auf verschiedene Abstände (15) zwischen der Lagerrosette (11) und dem Getriebegehäuse (6) einstellbar sind,
**dadurch gekennzeichnet,**
daß jede Hülse (14) in einem von der Rückseite der Lagerrosette (11) des Bedienungshebels (10) abstehenden und in die Löcher (13) des Flügelprofils (1) eintauchenden Rohransatz (16) axial verschiebbar aufgenommen ist,
daß jeder Rohransatz (16) über einen von seinem freien Ende ausgehenden Längenbereich (16a) längsgeschlitzt und radial federnd nachgiebig ausgebildet ist,
daß jeder Rohransatz (16) in seinem federnd nachgiebigen Bereich am Innenumfang mit Rastverzahnungen (19) versehen ist,
daß jede Hülse (14) an ihrem Außenumfang wenigstens nahezu über Ihre ganze Länge mit komplementären Gegenrastverzahnungen (21) versehen ist,
und daß jede Hülse (14) an ihrem Innenumfang wenigstens einen Kupplungsvorsprung (22) trägt, mit dem die durch sie und den zugehörigen Rohransatz (16) in die Gewindebohrung des Getriebegehäuses (6) eindrehbare Ankerschraube (12) in axialen Mitnahmeeingriff bringbar ist.

2. Abstützvorrichtung nach Anspruch 1,
**dadurch gekennzeichnet,**
daß die Rastverzahnungen (19) der Rohransätze (16) und die Gegenrastverzahnungen (21) der Hülsen (14) aus Sägezahnprofilen bestehen, die mit ihrer steilen Zahnflanke (216) dem freien Ende der Rohransätze (16) zugewendet sind.

3. Abstützvorrichtung nach einem der Ansprüche 1 und 2,
**dadurch gekennzeichnet,**
daß die Rastverzahnungen (19) und die Gegenrastverzahnungen (21) jeweils auf zu den Längsachsen von Rohransätzen (16) und Hülsen (14) normal ausgerichteten Ebenen liegen.

4. Abstützvorrichtung nach einem der Ansprüche 1 bis 3,
**dadurch gekennzeichnet,**
daß die Hülsen (14) in den Rohransätzen (16) drehgesichert gehalten sind.

5. Abstützvorrichtung nach einem der Ansprüche 1 und 2,
**dadurch gekennzeichnet,**
daß die Rastverzahnungen (19) und die Gegenrastverzahnungen (21) als Gewinde gestaltet sind.

6. Abstützvorrichtung nach einem der Ansprüche 1 bis 5,
**dadurch gekennzeichnet,**
daß der längsgeschlitzte Bereich (16a) der Rohransätze (16) gegenüber deren ungeschlitzem Längenbereich (16b) um ein Maß in seinem Außendurchmesser (16d) verringert ist, welches mindestens der doppelten Profiltiefe (19c) der Rastverzahnungen (19) am Innenumfang entspricht.

7. Abstützvorrichtung nach einem der Ansprüche 1 bis 6,
**dadurch gekennzeichnet,**
daß die Lagerrosette (11) mit ihren Rohransätzen (16) sowie die Hülsen (14) aus Kunststoff bestehen und daß in die Lagerrosette (11) zumindest auf der von den Rohransätzen (16) abgewendeten Stirnfläche metallische Widerlager (24) eingebettet sind, die je ein Senkloch zur Aufnahme der Ankerschraubenköpfe enthalten.

8. Abstützvorrichtung nach einem der Ansprüche 1 bis 3 und 5 bis 7,
**dadurch gekennzeichnet,**
daß die Hülsen (14) an der Stirnfläche (23) ihres freien Endes mit Noppen oder Vorsprüngen, z.B. radialen Rillen, Riffeln, Zähnen od. dgl., versehen sind und daß die die Gewindebohrungen des Getriebegehäuses (6) umgebenden Seitenflächen eine hierzu komplementäre Profilierung enthalten.

9. Abstützvorrichtung nach einem der Ansprüche 1 bis 8,
**dadurch gekennzeichnet,**
daß die Rastverzahnungen (19) am Innenumfang der durch Längsschlitze (17) im Rohrabschnitt entstehenden Federsegmente (18) zum benachbarten Federsegment (18) die gleiche Höhenlage der Rastverzahnungen (19) aufweisen.

## Claims

1. A support device between the casing (6) of an inset espagnolette mechanism (4) for the leaves of windows or doors or the like and an escutcheon (11) of an operating handle (10), the escutcheon being connectable to the leaf by way of fixing screws (12), the operating handle engaging by way of a profiled shank in the follower of the drive member mounted in the mechanism casing (6), the same being received in a recess open on the rebate side in the leaf profile (1), the escutcheon (11) being disposed on the end face of such profile on the room side and the fixing screws (12) engaging, through apertures (13) which extend from the end face on the room side perpendicularly thereto, in tapped bores in the casing (6) disposed in the recess, sleeves (14) which are coaxial of the fixing screws (12) extending through the apertures (13) in the leaf profile (1) and having adjustment members (21) for adjusting their operative length to various distances (15) between the escutcheon (11) and the casing (6),
characterised in that
each sleeve (14) is received for axial displacement in a tubular extension (16) projecting from the back of the escutcheon (11) and extending into the apertures (13) in the leaf profile (1);
each tubular extension (16) is formed with longitudinal slots over the part (16a) of its length starting from its free end and is radially resilient;
each tubular extension (16) has detent toothings (19) on the inner periphery in its resilient part;
each sleeve (14) has on its outer periphery at least substantially over its entire length companion detent toothings (21), and
each sleeve (14) has on its inner periphery at least one coupling projection (22) for bringing into axial driving engagement a fixing screw (12) which can be screwed through such sleeve and the associated tubular extension (16) into the tapped bore in the casing (6).

2. A support device according to claim 1,
characterised in that
the detent toothings (19) of the tubular extensions (16) and the companion detent toothings (21) of the sleeves (14) consist of sawtooth profiles whose steep tooth flanks (216) face the free end of the tubular extensions (16).

3. A support device according to claim 1 or 2,
characterised in that
the detent toothings (19) and the companion detent toothings (21) are each disposed on planes aligned perpendicularly to the longitudinal axes of the tubular extensions (16) and sleeves (14).

4. A support device according to any one of claims 1 to 3,
characterised in that
the sleeves (14) are secured in rotation in the tubular extensions (16).

5. A support device according to claim 1 or 2,
characterised in that
the detent toothings (19) and the companion detent toothings (21) are in screwthread form.

6. A support device according to any of claims 1 to 5,
characterised in that
the longitudinally slotted part (16a) of the tubular extensions (16) is of an outside diameter (16d) which, as compared with its unslotted part (16b), is less by an amount corresponding at least to twice the profile depth (19c) of the detent toothings (19) on the inner periphery.

7. A support device according to any of claims 1 to 6,
characterised in that
the escutcheon (11), its tubular extensions (16) and the sleeves (14) are made of plastic and in that metal abutments (24) each formed with a countersunk aperture to receive the heads of fixing screws are embedded in the escutcheon (11) at least on the end face remote from the tubular extensions (16).

8. A support device according to any of claims 1 to 3 and 5 to 7,
characterised in that
the sleeves (14) have on the end face (23) of their free ends protuberances or projections, for example, radial grooving, fluting, toothing or the like, and the side surfaces around the tapped bores of the casing (6) are profiled to correspond thereto.

9. A support device according to any of claims 1 to 8,
characterised in that
the detent projections (19) on the inner periphery of the resilient segments (18) arising as a result of the longitudinal slots (17) in the tube part have in respect of the adjacent resilient segment (18) the same height of detent projections (19).

## Revendications

1. Dispositif d'espacement placé entre le boîtier de manoeuvre (6) d'une crémone (4) pour battants de fenêtres, vantaux de portes ou panneaux d'autres fermetures de baies du même genre et un palier (11) pouvant être relié à ce boîtier de manoeuvre au moyen de vis d'ancrage (12), ledit palier faisant partie d'un levier de manoeuvre (10) s'engrenant avec une bosse profilée dans le pignon de l'élément de commande disposé dans le boîtier de manoeuvre (6), ledit boîtier de manoeuvre (6) étant placé dans un logement du profilé dudit panneau de fermeture de baie (1), ouvert du côté de la surface de feuillure, le palier (11) reposant sur la surface frontale du profilé dudit panneau de fermeture de baie (1) côté interne et les vis d'ancrage (12) s'engrenant dans des alésages du boitier de manoeuvre (6) se trouvant dans le logement, ce par des trous (13) traversant la surface frontale côté interne et dirigés perpendiculairement à cette surface, les trous prévus dans le profilé du panneau de fermeture de baie (1) étant traversés par des manchons (14) orientés coaxialement par rapport aux vis d'ancrage (12) et les manchons (14) présentant des éléments de réglage (21) grâce auxquels la longueur effective de ces manchons peut être réglée à des distances différentes (15) entre le palier (11) et le boîtier de manoeuvre (6),
**caractérisé en ce que**
- chacun des manchons (14) est monté de manière à pouvoir coulisser axialement dans un prolongement tubulaire (16) faisant saillie de la face anière du palier (11) du levier de manoeuvre (10) et s'enfonçant dans les trous (13) du profilé du panneau de fermeture de baie (1);
- chacun des prolongements tubulaires (16) est fendu longitudinalement sur une zone longitudinale (16a) partant de son extrémité libre et est conçu de manière à être élastique dans le sens radial;
- chacun des manchons (14) est pourvu sur sa périphérie externe au moins presque sur toute sa longueur d'endentements (21) complémentaires;
- chacun des manchons (14) porte sur sa périphérie interne au moins une saillie d'accouplement (22) grâce à laquelle la vis d'ancrage (12), pouvant être insérée dans l'alésage fileté du boîtier de manoeuvre (6) en passant à travers le prolongement tubulaire et le manchon, peut être mise en contact d'entraînement avec ledit manchon.

2. Dispositif d'espacement selon la revendication 1, caractérisé en ce que les endentements (19) des prolongements tubulaires (16) et les endentements opposés (21) des manchons (14) ont un profil en dents de scie, les faces inclinées des dents (21b) étant tournées vers l'extrémité libre des prolongements tubulaires (16).

3. Dispositif d'espacement selon l'une ou l'autre des revendications 1 et 2, caractérisé en ce que les endentements (19) et les endentements opposés (21) sont disposés respectivement dans des plans dirigés normalement par rapport aux axes longitudinaux des prolongements tubulaires (16) et des manchons (14).

4. Dispositif d'espacement selon l'une ou l'autre des revendications 1 à 3, caractérisé en ce que les manchons (14) sont maintenus fixement dans les prolongements tubulaires (16) de manière à ne pas tourner.

5. Dispositif d'espacement selon l'une ou l'autre des revendications 1 et 2, caractérisé en ce que les endentements (19) et les endentements opposés (21) sont conçus comme des filets.

6. Dispositif d'espacement selon l'une ou l'autre des revendications 1 à 5, caractérisé en ce que la zone fendue longitudinalement (16a) des prolongements tubulaires (16) présente un diamètre extérieur (16d) réduit par rapport à la zone longitudinale non fendue dans une mesure telle qu'il correspond au moins au double de la profondeur de profilage (19c) des endentements (19) sur la périphérie interne.

7. Dispositif d'espacement selon l'une ou l'autre des revendications 1 à 6, caractérisé en ce que le palier (11) pourvu de ses prolongements tubulaires (16) ainsi que les manchons (14) sont composés en matière plastique et en ce que dans le palier (11) sont encastrées des butées (24) métalliques au moins sur la surface frontale opposée aux prolongements tubulaires (16), lesdites butées présentant chacune un chanfrein destiné à la réception des têtes de vis d'ancrage.

8. Dispositif d'espacement selon l'une ou l'autre des revendications 1 à 3 et 5 à 7, caractérisé en ce que les manchons (14) sont pourvus sur la surface frontale (23) de leur extrémité libre de boutons ou de saillies, à savoir par exemple de rainures radiales, de cannelures, de dents ou similaires et en ce que les surfaces latérales entourant les alésages du boîtier de manoeuvre (6) présentent un profilage complémentaire à ces éléments.

9. Dispositif d'espacement selon l'une ou l'autre des revendications 1 à 8, caractérisé en ce que les endentements (19) présentent sur la périphérie interne des segments élastiques (18) délimités par la fente longitudinale (17) dans la partie tubulaire la même position en hauteur des endentements (19) par rapport au segment élastique voisin (18).
